# EUROPEAN PATENT APPLICATION

(11) **EP 4 629 044 A1**
(43) Date of publication of application: **08.10.2025**
(21) Application number: 23896662.6
(22) Date of filing: 24.11.2023
(51) Int. Cl.: G06F 3/0483

(54) **INTERACTION METHOD AND APPARATUS BASED ON PAGE CONTENT, AND DEVICE AND STORAGE MEDIUM**

(30) Priority: 29.11.2022 CN 202211515148
(71) Applicant: Beijing Zitiao Network Technology Co., Ltd., Beijing 100190 (CN)
(72) Inventor: CHEN, Shuyu, Beijing 100028 (CN); SHU, Siqi, Beijing 100028 (CN)
(74) Representative: Marks & Clerk LLP
(86) International application number: PCT/CN2023/133846
(87) International publication number: WO 2024/114511

(57) **Abstract**

Disclosed in the embodiments of the present disclosure are an interaction method and apparatus based on page content, and a device and a storage medium. The interaction method based on page content comprises:
presenting preset content on a preset page; in response to determining that a preset condition is met, presenting a target interaction area on the preset page; and displaying, in the target interaction area, a preset interaction control and a target user identifier associated with the preset interaction control, wherein the preset interaction control is used for triggering the sending of an interaction message to a target user to whom the associated target user identifier belongs, the target user has a preset association relationship with the current user, and the interaction message is associated with the preset content.

## Description

The present application claims priority to Chinese patent application No. 202211515148.X, filed on November 29, 2022. The disclosed content of the above Chinese patent application is hereby incorporated by reference as a part of the present application.

### TECHNICAL FIELD

Embodiments of the present disclosure relate to an interaction method, a device, an apparatus and a storage medium based on page content.

### BACKGROUND

With the rapid development of internet technologies and terminal technologies, application programs provide more and more functions. When the application programs are used by users, the users may browse the rich page content displayed on pages, and also share the page content to other users for interaction.

### SUMMARY

Embodiments of the present disclosure provide an interaction method, a device, an apparatus and a storage medium based on page content.

In a first aspect, an embodiment of the present disclosure provides an interaction method based on page content, and the interaction method based on the page content includes:
displaying preset content in a preset page;
in response to determining that a preset condition is met, displaying a target interaction region in the preset page; and
displaying a preset interaction control and a target user identifier associated with the preset interaction control in the target interaction region, wherein the preset interaction control is configured to trigger sending of an interaction message to a target user belonging to the target user identifier associated, the target user has a preset association relationship with a current user, and the interaction message is associated with the preset content.

In a second aspect, the embodiment of the present disclosure further provides an interaction device based on page content, and the interaction device based on the page content includes: a content display module, an interaction region display module, and a display module.

The content display module is configured to display preset content in a preset page;
the interaction region display module is configured to, in response to determining that a preset condition is met, display a target interaction region in the preset page; and
the display module is configured to display a preset interaction control and a target user identifier associated with the preset interaction control in the target interaction region, wherein the preset interaction control is configured to trigger sending of an interaction message to a target user belonging to the target user identifier associated, the target user has a preset association relationship with a current user, and the interaction message is associated with the preset content.

In a third aspect, the embodiment of the present disclosure further provides an electronic apparatus, and the electronic apparatus includes: one or more processors; and a storage device.

The storage device is configured to store one or more programs.

When the one or more programs are executed by the one or more processors, the one or more processors achieve the interaction method based on the page content provided in an embodiment of the present disclosure.

In a fourth aspect, the embodiment of the present disclosure further provides a storage medium containing a computer executable instruction, and the computer executable instruction is used to execute the interaction method based on the page content provided in the embodiment of the present disclosure when executed by a computer processor.

### BRIEF DESCRIPTION OF DRAWINGS

Combining drawings and referring to specific implementation modes below, the above and other features, advantages, and aspects of each embodiment of the present disclosure may become more apparent. Throughout the drawings, the same or similar reference numbers represent the same or similar elements. It should be understood that the drawings are schematic, and members and elements may not be drawn to scale.
Fig. 1 is a flow schematic diagram of an interaction method based on page content provided in an embodiment of the present disclosure;
Fig. 2 is a schematic diagram of an interface interaction provided in an embodiment of the present disclosure;
Fig. 3 is a schematic diagram of an interface provided in an embodiment of the present disclosure;
Fig. 4 is a schematic diagram of another interface provided in an embodiment of the present disclosure;
Fig. 5 is a schematic diagram of another interface interaction provided in an embodiment of the present disclosure;
Fig. 6 is a flow schematic diagram of another interaction method based on page content provided in an embodiment of the present disclosure;
Fig. 7 is a schematic diagram of another interface interaction provided in an embodiment of the present disclosure;
Fig. 8 is a structure schematic diagram of an interaction device based on page content provided in an embodiment of the present disclosure; and
Fig. 9 is a structure schematic diagram of an electronic apparatus provided in an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be implemented in various forms and should not be construed as being limited to the embodiments described here. On the contrary, these embodiments are provided for more thorough and complete understanding of the present disclosure. It should be understood that the drawings and embodiments of the present disclosure are only for exemplary purposes and are not intended to limit the protection scope of the present disclosure.

It should be understood that various steps recorded in method implementation modes of the present disclosure may be executed in different orders and/or executed in parallel. In addition, the method implementation modes may include additional steps and/or omit executing steps shown. The scope of the present disclosure is not limited in this aspect.

The term "including" and its variations used in the present disclosure are open-ended including, namely "including but not limited to". The term "based" is "based at least partially". The term "an embodiment" means "at least one embodiment"; the term "another embodiment" means "at least one additional embodiment"; and the term "some embodiments" means "at least some embodiments". The relevant definitions of other terms are provided in the following description.

It should be noted that the concepts such as "first" and "second" mentioned in the present disclosure are only used to distinguish different devices, modules, or units, and are not intended to limit the orders of functions executed by these devices, modules, or units or relationships of interdependence thereof.

It should be noted that the modifications of "a", "an" and "a plurality of" mentioned in the present disclosure are schematic rather than restrictive, and those skilled in the art should understand that unless otherwise explicitly stated in the context, it should be understood as "one or more".

The names of messages or information exchanged between a plurality of devices in implementation modes of the present disclosure are only for descriptive purposes and are not intended to limit the scope of these messages or information.

It may be understood that before technical solutions disclosed in each embodiment of the present disclosure are used, users should be informed of the types, usage scopes, and usage scenarios and the like of personal information involved in the present disclosure by appropriate means in accordance with relevant laws and regulations, and user authorization should be acquired.

For example, in response to receiving a user's active request, prompt information is sent to the user, and the user is explicitly prompted that an operation being requested to execute by him/her will require acquiring and using the user's personal information. Thus, the user may autonomously select whether to provide the personal information to software or hardware such as an electronic apparatus, an application program, a server, or a storage medium that executes the operations of the technical solutions of the present disclosure according to the prompt information.

As an optional but non-restrictive implementation mode, in response to receiving the user's active request, the way to send the prompt information to the user may be, for example, in the form of a pop-up window, and the prompt information may be presented in the pop-up window in the form of a text. In addition, the pop-up window may also carry a selection control for the user to select whether to "agree" or "disagree" to provide the personal information to the electronic apparatus.

It may be understood that the above informing and acquiring the user authorization processes are only schematic and do not limit the implementation modes of the present disclosure. Other modes that meet the relevant laws and regulations may also be applied to the implementation modes of the present disclosure.

It may be understood that data involved in the present technical solution (including but not limited to the data itself, data acquisition or use) should comply with the requirements of corresponding laws and regulations and relevant provisions.

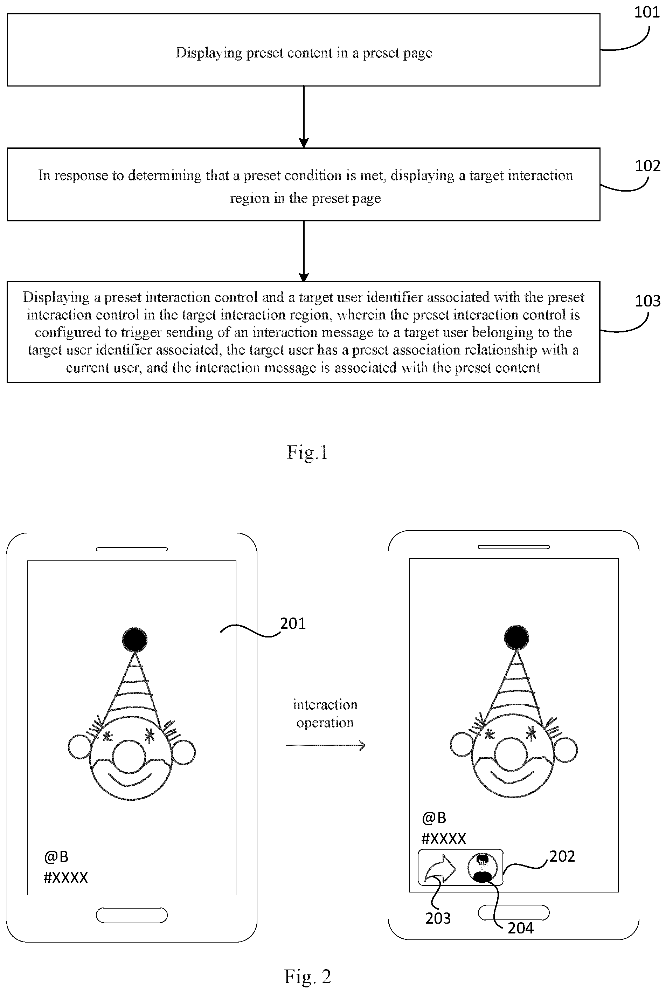

Fig. 1 is a flow schematic diagram of an interaction method based on page content provided in an embodiment of the present disclosure. The embodiment of the present disclosure is applicable to the situation of the interaction based on the page content, the method may be executed by an interaction device based on page content, and the device may be implemented in the form of software and/or hardware. Optionally, it may be implemented by an electronic apparatus, and the electronic apparatus may be mobile terminals such as a mobile phone, a smart watch, a tablet computer, and a personal digital assistant, or may be devices such as a personal computer (PC) or a server.

As shown in Fig. 1, the method includes:
Step 101, displaying preset content in a preset page.

In the embodiment of the present disclosure, the preset page may be a page in a preset application program, and the specific type of the preset application program is not limited. For example, it may be a video application program, a live streaming application program, a shopping application program, or an information application program, or it may be other types of application programs. The preset page is used to display the preset content, and the preset content may be various forms of information or resources such as images, texts, audios or videos, it is not specifically limited. Optionally, the preset content is content published by the user, and it may specifically be multimedia content published, such as a video published by the user.

Step 102, displaying a target interaction region in the preset page in response to determining that a preset condition is met.

In the embodiment of the present disclosure, the preset condition may be set according to actual needs. For example, it may be set based on an interaction operation of a current user acting on the preset content.

Exemplarily, the current user may be understood as a user who is currently utilizing the preset application program to view the preset page. During the process of viewing the preset content currently displayed on the preset page, the current user may generate various forms of interaction operations. The interaction operations may be directly implemented by the current user on the electronic apparatus, such as touching a screen with a finger, the interaction operation of the current user is determined according to a received touching operation which is input for the preset content; and the interaction operations may also be determined according to data generated during the process of displaying the preset content. For example, in the process of viewing the preset content, the user does not input any operations for the displaying process of the preset content, so that the preset content is displayed completely, such as video playing is completed, playing completion data may be generated, and then the interaction operation of the current user is determined.

Exemplarily, based on the interaction operation of the current user acting on the preset content, the target interaction region is displayed on the preset page, namely, when the preset content is displayed on the preset page, the target interaction region is not displayed. In the process of displaying the preset content, based on the interaction operation, the target interaction region is displayed on the preset page, namely, the target interaction region appears during the process of displaying the preset content. Exemplarily, the target interaction region may appear at the bottom of an image of a preset content after the preset condition is met, and original information at the bottom of the image, such as text information, is move up accordingly in position. Region attributes of the target interaction region are not limited, and the region attributes may be, for example, a shape, a dimension, a size, a background color, a frame style and a position in the preset page of the region.

Fig. 2 is a schematic diagram of an interface interaction provided in an embodiment of the present disclosure. As shown in Fig. 2, it is assumed that the preset content (such as a clown video in the figure) is displayed currently on the preset page 201, in the process of viewing the preset content by the current user, the interaction operation of the current user acting on the preset content is detected, and the target interaction region 202 is displayed on the preset page 201. The target interaction region 202 may be, for example, a rectangular region located in the lower left corner of the preset page. Optionally, text information is also displayed in the preset page 201, such as "@B #XXXX" in the figure. When the target interaction region 202 is displayed, the display position of the text information is moved up correspondingly and displayed above the target interaction region 202.

Step 103, displaying a preset interaction control and a target user identifier associated with the preset interaction control in the target interaction region, herein the preset interaction control is used to trigger sending of an interaction message to a target user belonging to the target user identifier associated, the target user has a preset association relationship with the current user, and the interaction message is associated with the preset content.

In the embodiment of the present disclosure, after the target interaction region is displayed in the preset page, the preset interaction control and the target user identifier associated mutually are displayed in the target interaction region. The number of the preset interaction controls and the number of the target user identifiers may be one or more, it is not specifically limited. The association relationship between the preset interaction control and the target user identifier may be one-to-one association or one-to-many association or the like, it is not specifically limited. As shown in Fig. 2, the preset interaction control 203 and the target user identifier 204 are displayed in the target interaction region 202.

Exemplarily, the target user identifier may be understood as a user identifier corresponding to a target user, and the user identifier may be a user name, a user nickname, or a user avatar or the like. In a preset application program, there may be a preset association relationship between users, and the preset association relationship is established by the user according to personal wishes. Namely, one user may decide whether to establish the preset association relationship with another user according to the personal wishes. There is the preset association relationship between the target user and the current user. In some application scenarios, the preset association relationship may be understood as a mutual friend relationship, or understood as a one-way following relationship between fans (namely followers) and persons to be followed or the like.

Exemplarily, the preset interaction control is used to trigger the sending of the interaction message to the target user belonging to one or more target user identifiers associated. Exemplarily, after the user triggers the preset interaction control by the way of clicking or long-pressing or the like, it is achieved that the interaction message may be sent to the target user corresponding to the target user identifier associated with the preset interaction control triggered. As shown in Fig. 2, it is assumed that after the user clicks on the preset interaction control 203, the interaction message may be sent to the target user belonging to the target user identifier 204.

Exemplarily, the specific association mode between the interaction message and the preset content is not limited. Optionally, the interaction message contains the preset content, it may be understood as sharing the preset content with the target user; alternatively, the interaction message contains content associated with the preset content, such as summary information or access entrance. For example, the preset page is a multimedia content display page, the interaction message contains multimedia content displayed in the preset page, and the multimedia content may include pictures, audios, or videos or the like; and for another example, the preset page is a live streaming page, the preset content is a live stream, and the interaction message may include an entrance to a live room corresponding to the live stream and the like. For another example, the preset page is a product explanation page, the preset content is product explanation information, and the interaction message may include a link to a detailed page of a product explained and the like.

Optionally, the preset interaction control includes a sharing control, and after the sharing control is triggered, the preset content is shared with the target user belonging to the target user identifier associated.

According to the interaction method based on the page content provided in the embodiment of the present disclosure, in the process of displaying the preset content in the preset page, the target interaction region is displayed in the preset page in response to determining that the preset condition is met, and the preset interaction control and the target user identifier associated with the preset interaction control are displayed in the target interaction region, herein the preset interaction control is used to trigger the sending of the interaction message to the target user belonging to the target user identifier associated, the target user has the preset association relationship with the current user, and the interaction message is associated with the preset content. By adopting the above technical solution, the displaying of the target interaction region is triggered when it is determined that the preset condition is met. By using the mutually associated preset interaction control and target user identifier displayed in the target interaction region, the current user may be prompted to send the interaction message associated with the preset content being displayed in the page to the user associated. In addition, the current user may conveniently send the interaction message to the target user who has the preset association relationship with it by the way of triggering the preset interaction control, as to enhance the convenience of sending the interaction message based on the page content and improve the message interaction efficiency.

In some embodiments, after the preset interaction control and the target user identifier associated with the preset interaction control are displayed in the target interaction region, it further includes:
receiving a triggering operation of the current user for a first preset interaction control associated with a first user identifier in the target user identifier, and send an interaction message to a first user belonging to the first user identifier. The advantage of such setting is that by receiving the triggering operation for the preset interaction control, the interaction message may be quickly and accurately sent to the user corresponding to the user identifier associated. Optionally, the interaction message is sent to the first user belonging to the first user identifier, so that the first user receives the preset content. Exemplarily, the first user side may receive the preset content by a session page, herein the session page may be a page used to display a session message between the current user and the first user.

In some embodiments, in response to determining that the preset condition is met, the target interaction region is displayed in the preset page, it includes: it is determined whether the interaction operation of the current user acting on the preset content meets the preset condition (referred to as a first preset condition here for conventionally distinguishing from the following content); and under a condition that it is determined that the interaction operation meets the preset condition, the target interaction region is displayed in the preset page. The advantage of such setting is that it may more reasonably determine the display timing of the target interaction region.

Exemplarily, the first preset condition may be set according to actual needs. For example, when it is detected that the first preset control is triggered by the current user, it is determined that the interaction operation of the current user acting on the preset content meets the first preset condition, herein the first preset control may be a forward interaction control for the preset content, namely a control for the current user to input a forward interaction operation for the preset content, and the forward interaction operation may be understood as an interaction operation that reflects the user's interest in the displayed content. The advantage of such setting is that after the current user triggers the first preset control, it may be considered that the current user may be interested in the preset content and may have a need to share it with the target user. At this time, the displaying of the target interaction region may serve as a prompt for the current user and facilitate the current user to share the preset content by the way of triggering the preset interaction control. Optionally, the first preset control may be, for example, a like control, a comment control, or a favorite control, and may include one or more of them.

For another example, when it is detected that the number of times that the playing of the preset content is completed reaches a preset number-of-times threshold, it is determined that the interaction operation of the current user acting on the preset content meets the first preset condition. The advantage of such setting is that if the current user views the preset content entirely or even views the preset content repeatedly, it may be considered that the current user may be interested in the preset content and may have a need to share it with the target user, thus the target interaction region is displayed timely. The preset content being a video is taken as an example, the playing of the preset content being completed may be understood as the video content is displayed already on the preset page. The number of times that the playing of the preset content is completed may be the number of times that the playing of the preset content is completed within a preset duration, or it may be the number of times for continuous playing completion or the like, it may be set according to the actual situation.

In some embodiments, in response to determining that the preset condition is met, the target interaction region is displayed in the preset page, it includes: when it is determined that historical display data of the preset content in a preset historical period meets a second preset condition, the target interaction region is displayed in the preset page. Exemplarily, the historical display data may include, for example, the number of interactions with the preset content in the preset historical period.

Optionally, the above two preset conditions may be combined to determine whether to display the target interaction region in the preset page.

In some embodiments, when it is determined that the interaction operation meets the first preset condition, the target interaction region is displayed in the preset page, it includes: when it is determined that the interaction operation meets the first preset condition, and the historical display data of the preset content in the preset historical period meets the second preset condition, the target interaction region is displayed in the preset page. The advantage of such setting is that, combined with a preset content dimension, the target interaction region is selectively displayed, so that the target interaction region is more reasonable.

In some embodiments, the preset interaction control and the target user identifier associated with the preset interaction control are displayed in the target interaction region, it includes: determining a target user from candidate users who have a preset association relationship with the current user; and displaying a preset interaction control and a target user identifier corresponding to the target user associated with the preset interaction control in the target interaction region. The advantage of such setting is that the appropriate target user identifier is reasonably selected for displaying in the target interaction region, the likelihood of the associated preset interaction control being triggered by the current user is improved, the probability of the current user manually reselecting the interaction message to send the user is reduced, the interaction message sending requirement of the current user are met, and the user operations are reduced. Optionally, based on a preset screening condition, the target user may be determined from the candidate users who have the preset association with the current user.

Optionally, a preset number of target user identifiers may be displayed in the target interaction region, the candidate users who have the preset association with the current user may be sorted based on the preset screening condition, and a preset number of the candidate users may be selected from a sorting result as the target user.

In some embodiments, the preset screening condition is determined based on at least one of the following: whether there is a target association relationship between the current user and the candidate user; and whether data generated from the historical interaction process between the current user and the candidate user meets a preset requirement. The advantage of such setting is that it may reasonably and accurately determine the target user.

Exemplarily, the target association relationship may be understood as an association relationship that meets a preset association condition based on the association relationship between the users, for example the association relationship is a friend, and the target association relationship is a special friend set by the user independently. It should be noted that the relevant data acquisition and application in determining whether the preset screening condition is met needs to be performed under the authorization of the current user and the candidate user.

In some embodiments, the preset interaction control and the target user identifier associated with the preset interaction control are displayed in the target interaction region, it includes: at least one preset interaction control and at least one target user identifier associated one-to-one with the at least one preset interaction control are displayed in the target interaction region. The advantage of such setting is that it may intuitively reflect the association relationship between the preset interaction control and the target user identifier, and it is convenient for the user to operate.

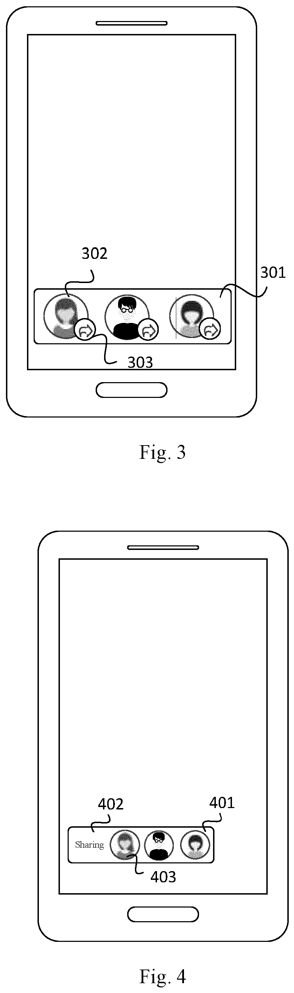

Fig. 3 is a schematic diagram of an interface provided in an embodiment of the present disclosure. As shown in Fig. 3, three target user identifiers 302 are displayed in the target interaction region 301, and the associated preset interaction control 303 is displayed in the lower right corner of each target user identifier 302. For example, if the current user clicks on the second preset interaction control, the interaction message is sent to the user belonging to the second target user identifier associated with the second preset interaction control.

In some embodiments, the preset interaction control and the target user identifier associated with the preset interaction control are displayed in the target interaction region, it includes: a preset interaction identifier and a preset interaction control using the target user identifier as control content are displayed in the target interaction region. The advantage of such setting is that it reuses the display region of the target user identifier and the preset interaction control, and provides a prompt to the current user by the preset interaction identifier, so that the display content of the target interaction region is more concise and clear, and it is convenient for the user to operate.

Fig. 4 is a schematic diagram of another interface provided in an embodiment of the present disclosure. As shown in Fig. 4, the preset interaction identifier 402, also denoted as "share" in the figure, is displayed in the target interaction region 401. Three preset interaction controls 403 are displayed on the right of the preset interaction identifier 402, and the associated target user identifier is displayed in each preset interaction control 403. For example, if the current user clicks on the third preset interaction control, the interaction message is sent to the user belonging to the target user identifier displayed in the third preset interaction control.

Optionally, it may also include: in response to the preset interaction identifier being triggered, sending the interaction message to the target user belonging to all target user identifiers currently displayed in the target interaction region. The advantage of such setting is that it allows the current user to achieve batch sending of the interaction message by the way of triggering the preset interaction identifier, the sending modes of the interaction message are enriched, and the user operations are further reduced.

In some embodiments, the preset interaction control and the target user identifier associated with the preset interaction control are displayed in the target interaction region, it includes: displaying a preset interaction control using target user identifier as control content in the target interaction region, herein the position of the target interaction region is associated with the position of the target interaction control in the preset page, and the target interaction control is used to trigger an interaction message sending function. The advantage of such setting is that it allows for the reuse of an existing target interaction control in the preset page to provide a prompt on the function of the preset interaction control, thus the display forms of the target interaction region are enriched. Herein, the interaction message sending function may be understood as a function of sending the interaction message to the user. For example, after the target interaction control (such as a share button) is triggered, a user list panel may be displayed, a user in a user list is selected, and then a confirm control is clicked to send the interaction message to the user selected. Optionally, the distance between the target interaction region and the target interaction control is less than a preset distance threshold.

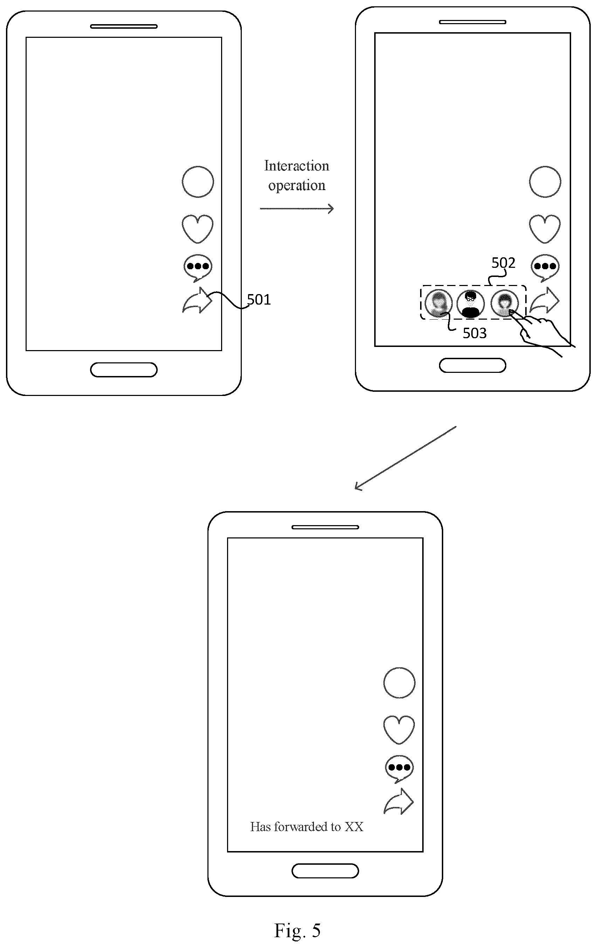

Fig. 5 is a schematic diagram of another interface interaction provided in an embodiment of the present disclosure. As shown in Fig. 5, the preset page includes the target interaction control 501. When it is determined that the interaction operation of the current user acting on the preset content meets the first preset condition, the target interaction region 502 is displayed in a position associated with the position of the target interaction control 501, herein the target interaction region 502 may be a transparent region (the position of the target interaction region 502 is indicated by a dashed line in the figure), three preset interaction controls 503 are displayed in the target interaction region 502, and the associated target user identifier is displayed in each preset interaction control 503.

In some embodiments, after sending the interaction message to the first user belonging to the first user identifier, it may further include: displaying a prompt indicating successful sending of the interaction message. As shown in Fig. 5, after the current user triggers the third preset interaction control, the interaction message is sent to a user XX corresponding to the target user identifier displayed, and "has forwarded to XX" is displayed below the preset page.

In some embodiments, after sending the interaction message to the first user belonging to the first user identifier, it may further include: cancelling the displaying of the first user identifier. Further, it may also include: cancelling the displaying of the target interaction region. As shown in Fig. 5, after the current user triggers the third preset interaction control, the target interaction region disappears, and the preset interaction control displayed in the target interaction region also disappears.

Optionally, cancelling the displaying of the target interaction region may include: judging whether there is a preset interaction control in the target interaction region that is not triggered. If not, the displaying of the target interaction region is cancelled; and if there is a preset interaction control not being triggered, the displaying of the target interaction region is maintained. The advantage of such setting is that it may support the current user to send the interaction message to the different target users sequentially.

In some embodiments, the number of the target user identifiers is multiple; herein, after sending the interaction message to the first user belonging to the first user identifier, it further includes: cancelling the displaying of the first user identifier; and displaying a second user identifier in the target interaction region, herein the second user identifier is a new target user identifier different from the first user identifier. The advantage of such setting is that it may improve the utilization ratio of the target interaction region, and the current user is allowed to send the interaction message to more target users.

Exemplarily, the display position of the second user identifier is not limited. For example, it may be displayed in a position in which the first user identifier disappears; and for another example, it may be displayed in the last position in the target interaction region. Under this situation, if the first user identifier is not located in the last position before disappearing, the target user identifier located after the first user identifier before the first user identifier disappears may be moved forwards sequentially, to free up the last position for the displaying of the second user identifier.

In some embodiments, the target user identifier is a plurality of user identifiers in a user identifier sequence, and the target user identifier is arranged and displayed based on the order of the user identifier sequence; herein displaying the second user identifier in the target interaction region includes:
determining an initial user identifier of the user identifiers that are not displayed in the user identifier sequence as the second user identifier; in the target interaction region, a third user identifier and the second user identifier are arranged and displayed based on the order of the user identifier sequence, herein the third user identifier includes user identifiers other than the first user identifier in the target user identifiers before the displaying of the first user identifier is not cancelled. The advantage of such setting is that it may quickly determine the second user identifier that needs to be added for displaying, and maintain the order of the user identifiers in the user identifier sequence in the target interaction region. Optionally, the user identification sequence is determined based on a preset screening condition.

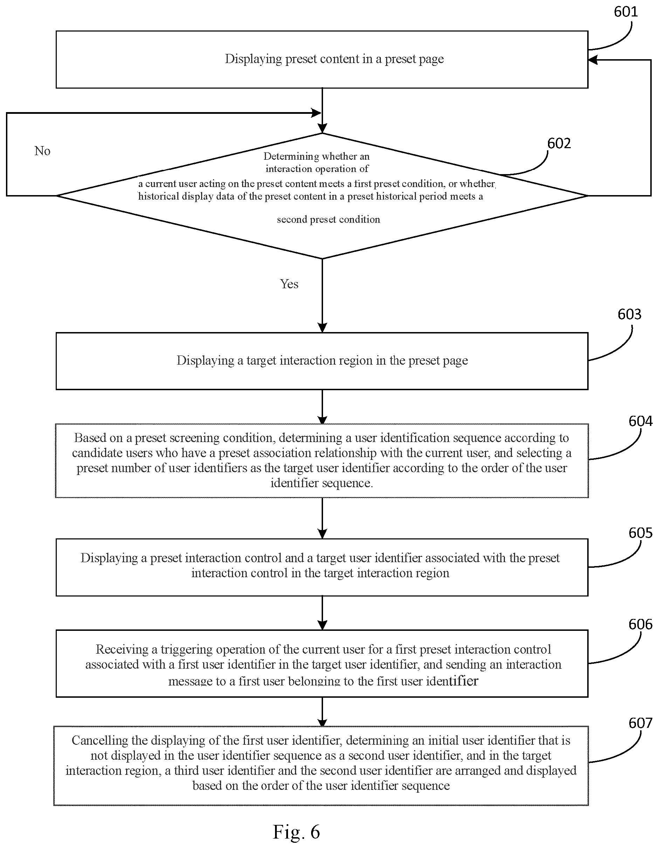

Fig. 6 is a flow schematic diagram of another interaction method based on page content provided in an embodiment of the present disclosure. Specifically, the method includes the following steps:
Step 601, displaying preset content in a preset page.

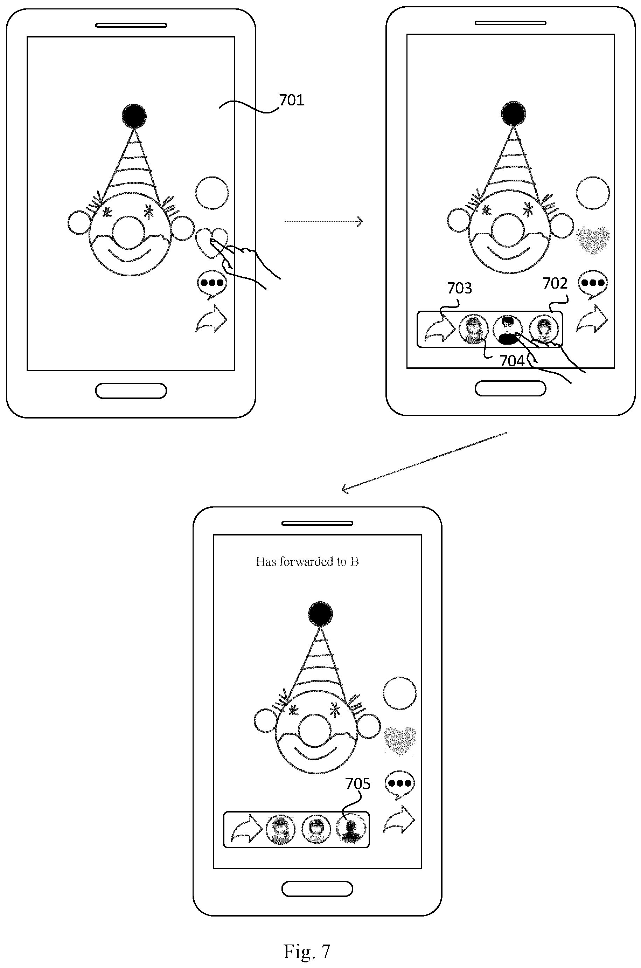

Fig. 7 is a schematic diagram of another interface interaction provided in an embodiment of the present disclosure. As shown in Fig. 7, a clown video is played in the preset page 701.

Step 602, determining whether an interaction operation of a current user acting on the preset content meets a first preset condition, or whether historical display data of the preset content in a preset historical period meets a second preset condition. If yes, executing Step 603; otherwise, repeating Step 602.

Exemplarily, when it is detected that the first preset control is triggered by the current user, it is determined that the interaction operation of the current user acting on the preset content meets the first preset condition. As shown in Fig. 7, it is assumed that the first preset control includes a like control (such as a heart-shaped control in Fig. 7), after the current user clicks on the like control, it is determined that the interaction operation of the current user acting on the preset content meets the first preset condition.

Exemplarily, the second preset condition may be that the number of interactions with the preset content in the preset historical period is greater than a preset value. For example, if the number of likes for the clown video in the last week is greater than the value X, it may be considered to meet the second preset condition.

If the interaction operation of the current user acting on the preset content meets the first preset condition, or the historical display data of the preset content in the preset historical period meets the second preset condition, Step 603 may be executed. If the interaction operation of the current user acting on the preset content does not meet the first preset condition, and the historical display data of the preset content in the preset historical period does not meet the second preset condition, a new judgment may be made, namely Step 602 is repeated until it is determined that any one of the conditions is met, or it is switched to display the next preset content.

Step 603, displaying a target interaction region in the preset page.

Exemplarily, as shown in Fig. 7, the target interaction region 702 is displayed in the preset page 701.

Step 604, based on a preset screening condition, determining a user identification sequence according to candidate users who have a preset association relationship with the current user, and selecting a preset number of user identifiers as the target user identifier according to the order of the user identifier sequence.

Exemplarily, each candidate user is scored according to the preset screening condition, the user identifiers each corresponding to each of candidate users are sorted according to the descending order of scores, to obtain the user identifier sequence. The top ranked preset number (such as the first three) of the user identifiers are selected as the target user identifier. For example, the user identifiers contained in the user identifier sequence are sequentially marked as A, B, C, D, and E (corresponding to an user A, an user B, an user C, an user D, and an user E respectively), then A, B, and C are selected for displaying.

Step 605, displaying a preset interaction control and a target user identifier associated with the preset interaction control in the target interaction region.

Herein, the preset interaction control is used to trigger the sending of the interaction message to the target user belonging to the target user identifier associated, the target user identifier is arranged and displayed based on the order of the user identifier sequence, and the interaction message is associated with the preset content.

Exemplarily, as shown in Fig. 7, the preset interaction identifier 703, that is, an arrow pattern in the figure, is displayed in the target interaction region 702.Three preset interaction controls 704 are displayed on the right of the preset interaction identifier 703, and the associated target user identifiers A, B, and C are sequentially displayed in the preset interaction controls 704 from left to right.

Step 606, receiving a triggering operation of the current user for a first preset interaction control associated with a first user identifier in the target user identifier, and sending an interaction message to a first user belonging to the first user identifier.

As shown in Fig. 7, it is assumed that the current user clicks on the preset interaction control associated with the user identifier of the user B, the interaction message is sent to the user B, such as the clown video is forwarded to the user B.

Step 607, cancelling the displaying of the first user identifier, determining an initial user identifier that is not displayed in the user identifier sequence as a second user identifier, and in the target interaction region, a third user identifier and the second user identifier are arranged and displayed based on the order of the user identifier sequence.

Herein, the third user identifier includes user identifiers other than the first user identifier in the target user identifier before the displaying of the first user identifier is not cancelled.

As shown in Fig. 7, the displaying of the user identifier of the user B is cancelled, the third user identifier is A and C, D in the user identifier sequence is determined as the second user identifier, and in the target interaction region, based on the order of the user identifier sequence, C is changed to the original position of B for displaying, and the user identifier D705 is displayed in the original position of C, namely the last position.

According to the interaction method based on the page content provided in the embodiment of the present disclosure, in the process of displaying the preset content in the preset page in the application program, it is determined whether the interaction operation of the current user acting on the preset content and the historical display data of the preset content in the preset historical period meet the corresponding preset conditions. If the corresponding preset condition is met, the displaying of the target interaction region is triggered, the preset number of the target user identifiers to be displayed are determined based on the preset screening condition, and according to the order of the user identifier sequence, the mutually associated preset interaction control and target user identifier displayed in the target interaction region may serve as a prompt function for the current user to send the interaction message associated with the preset content being displayed on the page to the associated user, so that the current user may conveniently send the interaction message to the target user who has the preset association relationship with her/him by the way of triggering the preset interaction control, the convenience of sending the interaction message based on the page content is enhanced, and the message interaction efficiency is improved. After the current user triggers a certain preset interaction control, a new target user identifier may be added to be displayed in the target interaction region according to the order of the user identification sequence, the coherence of sending the interaction message is improved, and it is further convenient for the user to operate.

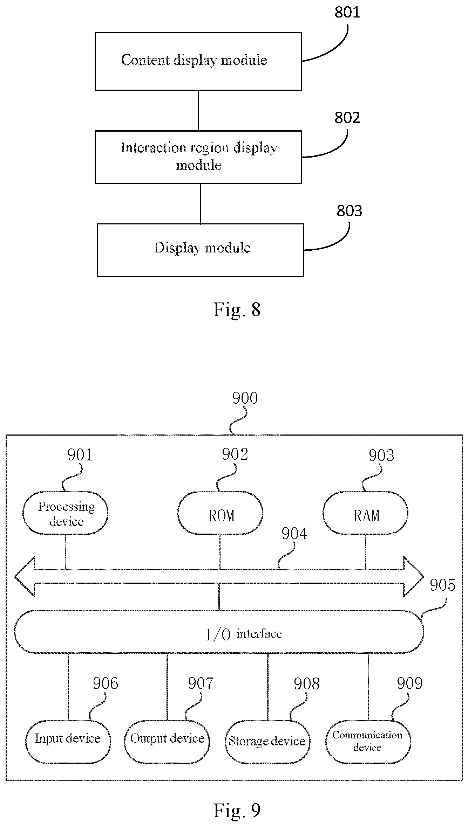

Fig. 8 is a structure schematic diagram of an interaction device based on page content provided in an embodiment of the present disclosure. As shown in Fig. 8, the device includes: a content display module 801, an interaction region display module 802, and a display module 803.

The content display module 801 is configured to display preset content in a preset page;
the interaction region display module 802 is configured to, in response to determining that a preset condition is met, display a target interaction region in the preset page; and
the display module 803 is configured to display a preset interaction control and a target user identifier associated with the preset interaction control in the target interaction region, herein the preset interaction control is used to trigger sending of an interaction message to a target user belonging to the target user identifier associated, the target user has a preset association relationship with a current user, and the interaction message is associated with the preset content.

According to the interaction device based on the page content provided in the embodiment of the present disclosure, the displaying of the target interaction region is triggered when it is determined that the preset condition is met. By using the mutually associated preset interaction control and target user identifier displayed in the target interaction region, it may prompt the current user to send the interaction message associated with the preset content being displayed on the page to the associated user. In addition, the current user may conveniently send the interaction message to the target user who has the preset association relationship with him/her by the way of triggering the preset interaction control, the convenience of sending the interaction message based on the page content is enhanced, and the message interaction efficiency is improved.

Optionally, the interaction region display module includes: a first determining unit and a display unit.

The first determining unit is used to determine whether the interaction operation of the current user acting on the preset content meets the preset condition; and
the display unit is used to, when it is determined that the interaction operation meets the preset condition, display the target interaction region in the preset page.

Optionally, the display unit is specifically used to:
when it is determined that the interaction operation meets the preset condition and the historical display data of the preset content in the preset historical period meets the second preset condition, display the target interaction region in the preset page.

Optionally, the display module includes: a second determining unit and a display unit.

The second determining unit is used to determine a target user from candidate users who have a preset association relationship with the current user; and
the display unit is used to display the preset interaction control and the target user identifier corresponding to the target user associated with the preset interaction control in the target interaction region.

Optionally, displaying the preset interaction control and the target user identifier associated with the preset interaction control in the target interaction region includes:
Displaying at least one preset interaction control and at least one target user identifier associated one-to-one with the at least one preset interaction control in the target interaction region; or displaying a preset interaction identifier and a preset interaction control using the target user identifier as control content in the target interaction region; or displaying a preset interaction control using target user identifier as control content is displayed in the target interaction region, herein the position of the target interaction region is associated with the position of the target interaction control in the preset page, and the target interaction control is used to trigger an interaction message sending function.

Optionally, the device further includes: a message sending module.

The message sending module is used to, after displaying the preset interaction control and the target user identifier associated with the preset interaction control in the target interaction region, receive the triggering operation of the current user for the first preset interaction control associated with the first user identifier in the target user identifier, and send the interaction message to the first user belonging to the first user identifier, so that the first user receives the preset content.

Optionally, the number of target user identifiers is multiple; and the device further includes: a display cancelling module and an identifier display module.

The display cancelling module is used to, after sending the interaction message to the first user belonging to the first user identifier, cancel the displaying of the first user identifier; and
the identifier display module is used to display a second user identifier in the target interaction region, herein the second user identifier is a new target user identification different from the first user identifier.

Optionally, the target user identifiers are a plurality of user identifiers in the user identifier sequence, and the target user identifiers are arranged and displayed based on the order of the user identifier sequence.

Herein, the identifier display module includes: a third determining unit and an identifier display unit.

The third determining unit is used to determine an initial user identifier that is not displayed in the user identifier sequence as the second user identifier; and
the identifier display unit is used to, in the target interaction region, arrange and display a third user identifier and the second user identifier based on the order of the user identifier sequence, herein the third user identifier includes user identifiers other than the first user identifier in the target user identifier before the displaying of the first user identifier is not cancelled.

The interaction device based on the page content provided in the embodiment of the present disclosure may execute the interaction method based on the page content provided in any one of the embodiments of the present disclosure, and has the functional modules and beneficial effects corresponding to the executing method.

It is worth noting that the respective units and modules included in the above device are only divided according to functional logic, but are not limited to the above division, as long as the corresponding functions can be achieved; in addition, the specific name of each functional unit is only for the purpose of distinguishing it from each other and is not intended to limit the scope of protection of the embodiments of the present disclosure.

Fig. 9 is a structure schematic diagram of an electronic apparatus provided in an embodiment of the present disclosure. Referring to Fig. 9 below, it shows the structure schematic diagram of the electronic apparatus (such as a terminal apparatus or a server in Fig. 9) 900 suitable for implementing the embodiments of the present disclosure. The terminal apparatus in the embodiment of the present disclosure may include but not limited to a mobile terminal such as a mobile phone, a notebook computer, a digital radio broadcasting receiver, a personal digital assistant (PDA), a portable android device (PAD), a portable multimedia player (PMP), a vehicle terminal (such as a vehicle navigation terminal), and a fixed terminal such as a digital television (TV) and a desktop computer. The electronic apparatus shown in Fig. 9 is only an example and should not impose any limitations on the functions and usage scopes of the embodiments of the present disclosure.

As shown in Fig. 9, the electronic apparatus 900 may include a processing device (such as a central processing unit, and a graphics processor) 901, which may execute various appropriate actions and processes according to a program stored in a read-only memory (ROM) 902 or a program loaded from a storage device 908 to a random access memory (RAM) 903. In RAM 903, various programs and data required for operations of the electronic apparatus 900 are also stored. The processing device 901, ROM 902, and RAM 903 are connected to each other by a bus 904. An input/output (I/O) interface 905 is also connected to the bus 904.

Typically, the following devices may be connected to the I/O interface 905: an input device 906 such as a touch screen, a touchpad, a keyboard, a mouse, a camera, a microphone, an accelerometer, and a gyroscope; an output device 907 such as a liquid crystal display (LCD), a loudspeaker, and a vibrator; a storage device 908 such as a magnetic tape, and a hard disk; and a communication device 909. The communication device 909 may allow the electronic apparatus 900 to wireless-communicate or wire-communicate with other apparatus so as to exchange data. Although Fig. 9 shows the electronic apparatus 900 with various devices, it should be understood that it is not required to implement or possess all the devices shown. Alternatively, it may implement or possess the more or less devices.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication device 909, or installed from the storage device 908, or installed from ROM 902. When the computer program is executed by the processing device 901, the above functions limited in the method according to the embodiments of the present disclosure are executed.

The names of the messages or information exchanged between a plurality of the devices in the implementation modes of the present disclosure are only for descriptive purposes and are not intended to limit the scopes of these messages or information.

The electronic apparatus provided in the embodiment of the present disclosure belongs to the same inventive concept as the interaction method based on the page content provided in the above embodiments. Technical details that are not described in detail in the present embodiment may be referred to the above embodiments, and the present embodiment has the same beneficial effects as the above embodiments.

An embodiment of the present disclosure provides a computer storage medium in which a computer program is stored, and when the program is executed by a processor, the interaction method based on the page content provided in the above embodiments is implemented.

It should be noted that the above computer-readable medium in the present disclosure may be a computer-readable signal medium, a computer-readable storage medium, or any combinations of the two. The computer-readable storage medium may be but not limited to, for example, a system, a device or a member of electricity, magnetism, light, electromagnetism, infrared, or semiconductor, or any combinations of the above. More specific examples of the computer-readable storage medium may include but not limited to: an electric connector with one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage member, a magnetic storage member or any suitable combinations of the above. In the present disclosure, the computer-readable storage medium may be any visible medium that contains or stores a program, and the program may be used by an instruction executive system, device or member, or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, device or member or in combination with it. The program code contained in the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above computer-readable medium may be contained in the above electronic apparatus; and it may also exist separately without being assembled into the electronic apparatus.

The above computer-readable medium carries one or more programs, and when the above one or more programs are executed by the electronic apparatus, the electronic apparatus: displays preset content in a preset page; in response to determining that a preset condition is met, displays a target interaction region in the preset page; and displays a preset interaction control and a target user identifier associated with the preset interaction control in the target interaction region, wherein the preset interaction control is used to trigger sending of an interaction message to a target user belonging to the target user identifier associated, the target user has a preset association relationship with a current user, and the interaction message is associated with the preset content.

The computer program code for executing the operation of the present disclosure may be written in one or more programming languages or combinations thereof, the above programming language includes but not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, which depends on the functions involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the module does not constitute a limitation on the module itself in a certain situation. For example, the content display module may also be described as "a module that displays the preset content in the preset page".

The functions described above in the specification may be at least partially executed by one or more hardware logic components. For example, non-restrictive exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, device , or apparatus. The machine-readable medium may be a machine-readable signal medium or a machine-readable storage medium. The machine-readable medium may include but not limited to an electronic, magnetic, optical, electromagnetic, infrared, or semiconductor system, device, or apparatus, or any suitable combinations of the above. More specific examples of the machine-readable storage medium may include an electric connector based on one or more wires, a portable computer disk, a hard disk, RAM, ROM, an erasable programmable read-only memory (EPROM or flash memory), an optical fiber, CD-ROM, an optical storage device, a magnetic storage device, or any suitable combinations of the above.

According to one or more embodiments of the present disclosure, an interaction method based on page content is provided, and the interaction method includes:
displaying preset content in a preset page;
in response to determining that a preset condition is met, displaying a target interaction region in the preset page; and
displaying a preset interaction control and a target user identifier associated with the preset interaction control in the target interaction region, wherein the preset interaction control is used to trigger sending of an interaction message to a target user belonging to the target user identifier associated, the target user has a preset association relationship with a current user, and the interaction message is associated with the preset content.

According to one or more embodiments of the present disclosure, displaying a preset interaction control and a target user identifier associated with the preset interaction control in the target interaction region includes:
displaying at least one preset interaction control and at least one target user identifier associated one-to-one with the at least one preset interaction control in the target interaction region; or
displaying a preset interaction identifier and a preset interaction control using the target user identifier as control content in the target interaction region; or
displaying a preset interaction control using target user identifier as control content in the target interaction region, wherein the position of the target interaction region is associated with the position of the target interaction control in the preset page, and the target interaction control is used to trigger an interaction message sending function.

According to one or more embodiments of the present disclosure, after displaying the preset interaction control and the target user identifier associated with the preset interaction control in the target interaction region, the interaction method further includes:
receiving a triggering operation of the current user for a first preset interaction control associated with a first user identifier in the target user identifier, and sending an interaction message to a first user belonging to the first user identifier, so that the first user receives the preset content.

According to one or more embodiments of the present disclosure, there is a plurality of target user identifiers;
wherein after sending the interaction message to the first user belonging to the first user identifier, the interaction method further includes:
cancelling the displaying of the first user identifier; and
displaying a second user identifier in the target interaction region, wherein the second user identifier is a new target user identifier different from the first user identifier.

According to one or more embodiments of the present disclosure, the target user identifiers are a plurality of user identifiers in a user identifier sequence, and the target user identifiers are arranged and displayed based on the order of the user identifier sequence;
wherein the displaying the second user identifier in the target interaction region includes:
determining an initial user identifier that is not displayed in the user identifier sequence as the second user identifier;
in the target interaction region, a third user identifier and the second user identifier are arranged and displayed based on the order of the user identifier sequence, wherein the third user identifier includes an user identifier other than the first user identifier in the target user identifiers before the displaying of the first user identifier is not cancelled.

According to one or more embodiments of the present disclosure, in response to determining that the preset condition is met, the displaying the target interaction region in the preset page includes:
determining whether the interaction operation of the current user acting on the preset content meets the preset condition; and
when it is determined that the interaction operation meets the preset condition, displaying the target interaction region in the preset page.

According to one or more embodiments of the present disclosure, the displaying the preset interaction control and the target user identifier associated with the preset interaction control in the target interaction region includes:
determining a target user from candidate users who have a preset association relationship with the current user; and
displaying a preset interaction control and a target user identifier corresponding to the target user associated with the preset interaction control in the target interaction region.

According to one or more embodiments of the present disclosure, the preset interaction control includes a sharing control.

According to one or more embodiments of the present disclosure, an interaction device based on page content is provided, and the interaction device includes: a content display module, an interaction region display module, and a display module.

The content display module is used to display preset content in a preset page;
the interaction region display module is used to, in response to determining that a preset condition is met, display a target interaction region in the preset page; and
the display module is used to display a preset interaction control and a target user identifier associated with the preset interaction control in the target interaction region, wherein the preset interaction control is used to trigger sending of an interaction message to a target user belonging to the target user identifier associated, the target user has a preset association relationship with a current user, and the interaction message is associated with the preset content.

According to one or more embodiments of the present disclosure, an electronic apparatus is provided, and the electronic apparatus includes: one or more processors; and a storage device.

The storage device is used to store one or more programs,
when the one or more programs are executed by the one or more processors, the interaction method based on the page content provided in the embodiment of the present disclosure is implemented by the one or more processors.

According to one or more embodiments of the present disclosure, a storage medium containing a computer executable instruction is provided, the computer executable instruction is used to execute the interaction method based on the page content provided in the embodiment of the present disclosure when executed by a computer processor.

The above description is only exemplary embodiments of the present disclosure and explanation of the technical principles applied. Those skilled in the art should understand that the disclosed scope involved in the present disclosure is not limited to the technical solutions formed by specific combinations of the above technical features, and should also cover other technical solutions formed by arbitrary combinations of the above technical features or equivalent features thereof without departing from the above disclosed concept. For example, a technical solution is formed by replacing the above features with (but not limited to) technical features with the similar functions disclosed in the present disclosure.

In addition, although the operations are depicted in a specific order, this should not be understood as requiring these operations to be executed in the specific order shown or in a sequential order. Under certain circumstances, multitasking and parallel processing may be advantageous. Similarly, although a plurality of specific implementation details are included in the above discussion, it should not be interpreted as limiting the scope of the present disclosure. Certain features described in the context of individual embodiments may also be combined and implemented in a single embodiment. On the contrary, various features described in the context of a single embodiment may also be implemented individually or in any suitable sub-combinations in the multiple embodiments.

Although the present subject is described already by using the language specific to structural features and/or method logic actions, it should be understood that the subject defined in the appended claims is not necessarily limited to the specific features or actions described above. On the contrary, the specific features and actions described above are merely exemplary forms of implementing the claims.

## Claims

1. An interaction method based on page content, comprising:
displaying preset content in a preset page;
in response to determining that a preset condition is met, displaying a target interaction region in the preset page; and
displaying a preset interaction control and a target user identifier associated with the preset interaction control in the target interaction region, wherein the preset interaction control is configured to trigger sending of an interaction message to a target user belonging to the target user identifier associated, the target user has a preset association relationship with a current user, and the interaction message is associated with the preset content.

2. The method according to claim 1, wherein the displaying a preset interaction control and a target user identifier associated with the preset interaction control in the target interaction region comprises:
displaying at least one preset interaction control and at least one target user identifier associated one-to-one with the at least one preset interaction control in the target interaction region; or
displaying a preset interaction identifier and a preset interaction control using the target user identifier as control content in the target interaction region; or
displaying a preset interaction control using the target user identifier as control content in the target interaction region, wherein a position of the target interaction region is associated with a position of the target interaction control in the preset page, and the target interaction control is configured to trigger an interaction message sending function.

3. The method according to claim 1 or 2, wherein after the displaying a preset interaction control and a target user identifier associated with the preset interaction control in the target interaction region, the method further comprises:
receiving a triggering operation of the current user for a first preset interaction control associated with a first user identifier in the target user identifier, and sending an interaction message to a first user belonging to the first user identifier, so that the first user receives the preset content.

4. The method according to claim 3, wherein a plurality of the target user identifiers are provided; wherein after the sending an interaction message to a first user belonging to the first user identifier, the method further comprises:
cancelling display of the first user identifier; and
displaying a second user identifier in the target interaction region, wherein the second user identifier is a new target user identifier different from the first user identifier.

5. The method according to claim 4, wherein the plurality of target user identifiers are a plurality of user identifiers in a user identifier sequence, and the plurality of target user identifiers are arranged and displayed based on an order of the user identifier sequence;
wherein the displaying the second user identifier in the target interaction region comprises:
determining an initial user identifier that is not displayed in the user identifier sequence as the second user identifier;
in the target interaction region, arranging and displaying a third user identifier and the second user identifier based on the order of the user identifier sequence, wherein the third user identifier comprises a user identifier except the first user identifier in the plurality of target user identifiers before the display of the first user identifier is not cancelled.

6. The method according to any one of claims 1-5, wherein in response to determining that the preset condition is met, the displaying a target interaction region in the preset page comprises:
determining whether the interaction operation of the current user acting on the preset content meets the preset condition; and
under a condition that determining that the interaction operation meets the preset condition, displaying the target interaction region in the preset page.

7. The method according to claim 1, wherein the displaying a preset interaction control and a target user identifier associated with the preset interaction control in the target interaction region comprises:
determining a target user from candidate users who have a preset association relationship with the current user; and
displaying a preset interaction control and a target user identifier corresponding to the target user associated with the preset interaction control in the target interaction region.

8. The method according to any one of claims 1-7, wherein the preset interaction control comprises a sharing control.

9. An interaction device based on page content, comprising:
a content display module, configured to display preset content in a preset page;
an interaction region display module, configured to, in response to determining that a preset condition is met, display a target interaction region in the preset page; and
a display module, configured to display a preset interaction control and a target user identifier associated with the preset interaction control in the target interaction region, wherein the preset interaction control is configured to trigger sending of an interaction message to a target user belonging to the target user identifier associated, the target user has a preset association relationship with a current user, and the interaction message is associated with the preset content.

10. The device according to claim 9, comprising: a module for executing the method according to any one of claims 2-8.

11. An electronic apparatus, comprising:
one or more processors; and
a storage device, configured to store one or more programs,
wherein when the one or more programs are executed by the one or more processors, the interaction method based on the page content according to any one of claims 1-8 is implemented by the one or more processors.

12. A storage medium containing a computer executable instruction, wherein the computer executable instruction is used to execute the interaction method based on the page content according to any one of claims 1-8 when executed by a computer processor.
